# EUROPÄISCHE PATENTSCHRIFT

(11) **EP 2 730 927 B1**
(45) Veröffentlichungstag und Bekanntmachung des Hinweises auf die Patenterteilung: **26.06.2019**
(21) Anmeldenummer: 12192158.9
(22) Anmeldetag: 12.11.2012
(51) Int. Cl.: G01N 35/04

(54) **Reagenzstation für ein automatisches Analysegerät**
Reagent station for an automatic analyzer
Poste de réactif pour un appareil d'analyse automatique

(43) Veröffentlichungstag der Anmeldung: 14.05.2014
(73) Patentinhaber: Siemens Healthcare Diagnostics Products GmbH, 35041 Marburg (DE)
(72) Erfinder: Pufahl, Holger, 65835 Liederbach (DE)

(56) Entgegenhaltungen:
- EP-A1- 2 333 563
- JP-A- 2008 216 173
- US-A1- 2004 057 872
- US-A1- 2005 013 735
- US-A1- 2005 207 938

## Beschreibung

Die Erfindung liegt auf dem Gebiet der automatischen Analysegeräte für die Labordiagnostik und betrifft eine Reagenzstation für ein automatisches Analysegerät mit einem ersten und einem zweiten Reagenzbehältervorrat und einer Transfervorrichtung, die Reagenzbehälter zwischen dem ersten dem zweiten Reagenzbehältervorrat transferiert. Ferner betrifft die Erfindung ein Verfahren zum Beladen eines automatischen Analysegerätes mit Reagenzbehältern.

Zahlreiche Nachweis- und Analyseverfahren zur Bestimmung physiologischer Parameter in Körperflüssigkeitsproben oder biologischer Proben werden heute automatisiert in großer Anzahl in automatischen Analysegeräten, auch sogenannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Probenbehältern, Reaktionsbehältern und Reagenzbehältern erforderlich, wie z.B. Transferarme mit Greiffunktion, Transportbänder oder drehbare Transporträder, sowie zum Transfer von Flüssigkeiten, wie z.B. Pipettiervorrichtungen. Das Gerät umfasst eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Messsysteme beruhen auf photometrischen Messprinzipien. Diese Verfahren ermöglichen den qualitativen und quantitativen Nachweis von Analyten in flüssigen Proben. Die Bestimmung klinisch relevanter Parameter, wie zum Beispiel der Konzentration oder der Aktivität eines Analyten, erfolgt vielfach, indem ein Teil einer Körperflüssigkeit eines Patienten, z.B. Blut, Plasma, Serum oder Urin, mit einem oder mehreren Testreagenzien in einem Reaktionsgefäß vermischt wird, wodurch eine biochemische Reaktion in Gang gesetzt wird, die eine messbare Veränderung einer optischen oder anderen physikalischen Eigenschaft des Testansatzes bewirkt.

Die für die Analysen erforderlichen Reagenzien werden üblicherweise in entsprechenden Reagenzbehältern in einem Reagenzbehältervorrat einer Reagenzstation in dem Gerät gelagert. Dieser weist aufgrund der Vielzahl unterschiedlicher durchzuführender Analysen typischerweise eine Vielzahl von Aufnahmepositionen für Reagenzbehälter auf und weist in vielen Fällen zudem eine Kühleinheit auf, um die Haltbarkeit der Reagenzien zu gewährleisten. Auf den Reagenzbehältervorrat greift das Analysegerät automatisiert zu und entnimmt bedarfsweise mittels eines Transferarms mit einer Pipettiereinrichtung die für die jeweilige Analyse benötigten Reagenzien.

Ist einer der Reagenzbehälter verbraucht oder hat er sein Haltbarkeitsdatum überschritten, ist ein Austausch erforderlich. Dieser muss manuell durch einen Benutzer erfolgen. Hierbei ergibt sich das Problem, dass ein manueller Austausch von Reagenzbehältern während des Betriebes des Analysegerätes, den Betrieb des Gerätes stört und den Testdurchsatz reduziert, weil durch eine Unterbrechung der Arbeitsabläufe im Gerät oder zumindest durch Unterbrechung des Zugriffs der Pipettiervorrichtung auf die Reagenzbehälter sichergestellt werden muss, dass einerseits der Benutzer beim Zugriff auf die Reagenzbehälter nicht durch bewegliche Vorrichtungen des Geräts, wie z.B. Pipettiervorrichtungen oder rotierende Transporträder, verletzt wird und andererseits keine Beschädigungen der beweglichen Vorrichtungen verursacht werden.

Bislang wird dieses Problem dadurch gelöst, dass die Abarbeitung vollständig unterbrochen wird oder aber die Zugriffsmöglichkeiten des Benutzers auf den Reagenzbehältervorrat eines Gerätes zeitlich eingeschränkt werden.

Im Stand der Technik sind daher Analysegeräte bekannt, die insbesondere das Beladen des Reagenzbehältervorrats über einen zweiten, separaten Reagenzbehältervorrat vorsehen. Hierzu ist beispielsweise eine Schublade vorgesehen, in die neue Reagenzbehälter vom Benutzer nacheinander eingeschoben werden. Die neuen Reagenzien werden anschließend automatisiert mittels einer Transfervorrichtung in den Hauptreagenzbehälter befördert. EP2333563 und US2005207938 offenbaren solche Analysegeräte.

Dies bewirkt, dass eine schnellere automatisierte Abarbeitung der Analysen möglich ist, weil der Austausch von Reagenzbehältern ohne Unterbrechung des laufenden Betriebs erfolgen kann. Dies wird erreicht, indem der direkte manuelle Zugriff auf den ersten Reagenzbehältervorrat, auf den während des Betriebes des Analysegerätes ständig durch eine Pipettiervorrichtung zum Transfer von Reagenzflüssigkeit zugegriffen wird, gänzlich unterbunden wird, und die Beladung der entsprechenden Aufnahmeposition mit einem neuen Reagenzbehälter nicht manuell durch einen Benutzer, sondern automatisiert mittels einer entsprechenden Transfervorrichtung erfolgt.

Es ist nunmehr Aufgabe der Erfindung, eine Reagenzstation für ein automatisches Analysegerät bereit zu stellen, welche die Flexibilität weiter erhöht und einen weitestgehend kontinuierlichen Austausch von Reagenzbehältern durch einen Benutzer erlaubt, ohne dabei geräteinterne Arbeitsschritte zu behindern.

Diese Aufgabe wird erfindungsgemäß dadurch gelöst, dass die Aufnahmepositionen des zweiten Reagenzbehältervorrats kreisförmig angeordnet sind und der zweite Reagenzbehältervorrat drehbar gelagert ist. Dazu weist der Reagenzbehältervorrat vorteilhafterweise eine steuerbare Dreheinrichtung, wie zum Beispiel einen Schrittmotor, auf.

Durch die kreisförmige Anordnung der Aufnahmepositionen in Verbindung mit der drehbaren Ausgestaltung des Reagenzbehältervorrats kann die Transfervorrichtung auf jede der Aufnahmepositionen zugreifen. Dies gilt auch und insbesondere, wenn die Transfervorrichtung in besonders einfacher Weise für einen linearen Transport ausgelegt ist. Dadurch ist es möglich, dass gleichzeitig Ent- und Beladeprozesse stattfinden können, und die Reihenfolge der be- und entladenen Reagenzbehälter kann vollkommen flexibel von einer Steuereinheit geplant und in die bereits geplanten Analyse-Arbeitsschritte optimiert integriert werden. Der manuelle Zugriff des Benutzers beschränkt sich auf eine Aufnahmeposition des zweiten Reagenzbehältervorrats, auf den kein ständiger automatisierter Zugriff durch eine Pipettiervorrichtung während der Analyse erfolgt. Vielmehr ist der zweite Reagenzbehältervorrat lediglich für das Beladen, Entladen und Aufbewahren mehrerer Reagenzbehälter vorgesehen. Der Zugriff auf den zweiten Reagenzbehälter erfolgt also auf der einen Seite manuell durch ein Benutzerzugriffselement, wie z.B. ein Zugriffsfenster, und auf der anderen Seite automatisiert durch die Transfervorrichtung.

Zur Beladung des Geräts wird ein neues Reagenzgefäß in den zweiten Reagenzbehältervorrat manuell eingesetzt. Sobald die Steuereinheit einen geeigneten Zeitpunkt ermittelt, der die laufende Analyse nicht behindert, wird ein neues Reagenzgefäß aus dem zweiten Reagenzbehältervorrat in den ersten Reagenzbehältervorrat mittels der Transfervorrichtung transferiert. Umgekehrt wird ein gebrauchtes, nicht mehr benötigtes Reagenzgefäß aus dem ersten Reagenzbehältervorrat in den zweiten Reagenzbehältervorrat mittels der Transfervorrichtung transferiert. Zur Entladung des Geräts wird das gebrauchte Reagenzgefäß aus dem zweiten Reagenzbehältervorrat manuell entnommen.

Vorteilhafterweise sind auch die Aufnahmepositionen des ersten Reagenzvorrats kreisförmig angeordnet. Besonders bevorzugt sind mehrere Aufnahmepositionen dabei in mehreren konzentrischen Kreisen kreisförmig angeordnet und die Aufnahmepositionen sind radiärsymmetrisch angeordnet. Dies erlaubt auch bei linearer Ausgestaltung des Transfersystems einen Zugriff auf alle Positionen des ersten Reagenzvorrats.

Die kreisförmige Anordnung der Aufnahmepositionen in drehbar gelagerten Reagenzbehältervorräten ermöglicht einen Zugriff auf alle Aufnahmepositionen bei gleichzeitig besonders einfacher Ausgestaltung der Transfervorrichtung, nämlich indem sich die Greifeinrichtung der Transfervorrichtung nur auf einer Linie bewegen muss, die auf die Mittelpunkte der Reagenzbehältervorräte gerichtet ist. Die Greifeinrichtung muss sich auf diese Weise lediglich in einer Dimension bewegen, während durch Drehung der Reagenzbehältervorräte die jeweilige Aufnahmeposition unter die Greifeinrichtung bewegt wird. Bevorzugt sind die Aufnahmepositionen dabei radiärsymmetrisch angeordnet.

Das Benutzerzugriffselement erlaubt den Zugriff eines Benutzers auf mindestens eine Aufnahmeposition für einen Reagenzbehälter in dem zweiten Reagenzbehältervorrat der Reagenzstation. Reagenzstationen in automatischen Analysegeräten sind üblicherweise mindestens durch das Gehäuse des Analysegerätes umgeben, um die zum Teil äußerst empfindlichen Reagenzien vor unerwünschten Temperaturschwankungen oder vor Lichteinwirkung zu schützen. Das Benutzerzugriffselement kann in Form ein Zugriffsfensters, d.h. in Form einer Öffnung im Gehäuse des Analysegerätes, ausgestaltet sein, das eine Verbindung zwischen dem Geräteinnenraum, in dem die Reagenzstation angeordnet ist, und der Geräteumgebung schafft. Bevorzugterweise handelt es sich bei dem Benutzerzugriffselement um ein verschließbares Zugriffsfenster, das zum Beispiel mit einer Klappe oder einer Schiebetür verschließbar ist.

Die Transfervorrichtung dient dem Transfer von Reagenzbehältern zwischen dem ersten und dem zweiten Reagenzbehältervorrat und umgekehrt. Je nach Art der zu transferierenden Reagenzbehälter kann die Transfervorrichtung unterschiedlich ausgestaltet sein. Bevorzugterweise umfasst die Transfervorrichtung eine Greifeinrichtung, die dazu ausgebildet ist, die Reagenzbehälter aus den Aufnahmepositionen zu heben oder sie darin abzusetzen. Bevorzugterweise ist die Greifeinrichtung dazu an einer Schiene beweglich angeordnet, die sich zwischen dem ersten und zweiten Reagenzbehältervorrat erstreckt. Alternativ kann sich die Greifeinrichtung an einem Roboterarm befinden. In einer bevorzugten Ausführungsform ist eine Greifeinrichtung mit einem Sensor ausgestattet, der es ermöglicht festzustellen, ob eine Aufnahmeposition in einem Reagenzbehältervorrat belegt oder frei ist.

Bevorzugterweise umfasst die Reagenzstation ferner eine Steuereinheit, die so konfiguriert ist, dass die Transfervorrichtung in einer gegebenen Stellung des zweiten Reagenzbehältervorrats immer auf eine andere Aufnahmeposition für einen Reagenzbehälter zugreift als dies dem Benutzer manuell möglich ist. Dies ermöglicht einerseits eine besonders hohe betriebliche Sicherheit. Andererseits wird so ein besonders effektiver Austausch möglich: Der Benutzer setzt einen Reagenzbehälter in eine Aufnahmeposition des drehbaren zweiten Reagenzbehältervorrats ein und steuert die Dreheinrichtung manuell, so dass Zugriff auf eine weitere Aufnahmeposition im zweiten Reagenzbehältervorrat gewährt wird. Hier kann wieder ein Reagenzbehälter eingesetzt oder entnommen werden usw. Sobald der Benutzer alle Reagenzbehälter eingesetzt hat, kann die Transfervorrichtung automatisiert operieren und nach Vorgabe der Steuereinheit die Dreheinrichtungen der Reagenzbehältervorräte und die Transfervorrichtung zum Transfer der Reagenzbehälter vom zweiten in den ersten Reagenzbehältervorrat steuern.

Die Steuereinheit ist derart konfiguriert, dass bei einem Zugriff durch einen Benutzer auf eine Aufnahmeposition des zweiten Reagenzbehältervorrats kein Zugriff durch das Transfersystem erfolgt. Zwar erfolgt auf den zweiten Reagenzbehältervorrat kein automatisierter Zugriff durch die Pipettiereinrichtung für die Analyse, sehr wohl jedoch ein automatisierter Zugriff durch die Transfervorrichtung. Durch eine Konfiguration der Steuereinheit, so dass bei einem manuellen Zugriff des Benutzers ein automatisierter Zugriff durch die Transfervorrichtung unterbunden wird, wird die betriebliche Sicherheit erhöht, da keine Verletzungen des Benutzers im Bereich des zweiten Reagenzbehältervorrats entstehen können. Zu diesem Zweck ist die Steuereinheit mit einer Sicherungseinrichtung verbunden. Beispielsweise kann eine Sicherung mittels einer Lichtschranke im Bereich des Benutzerzugriffselements erfolgen, die einen Zugriff der Transfervorrichtung unterbricht, sobald ein Benutzerzugriff entdeckt wird. Ist das Benutzerzugriffselement als Zugriffsfenster ausgestaltet, kann eine verriegelbare Tür oder Klappe vorgesehen sein, wobei die Transfervorrichtung nur im verriegelten Zustand der Tür oder Klappe auf eine Aufnahmeposition zugreifen kann.
In weiterer vorteilhafter Ausgestaltung weist die Reagenzstation eine Identifikationseinrichtung für Reagenzbehälter auf. Die Identifikationseinrichtung kann beispielsweise einen Barcode-, QR-Code- oder RFID-Leser umfassen, der auf den Reagenzgefäßen aufgedruckte Informationen ausliest. Alternativ kann die Identifikationseinrichtung eine Digitalkamera umfassen, die ein digitales Bild eines Reagenzbehälters aufnimmt und mit gespeicherten Informationen zur Identifikation verschiedener Reagenzbehälter vergleicht.

Bevorzugterweise ist die Identifikationseinrichtung entlang des Transferweges zwischen dem zweiten und ersten Reagenzbehältervorrat oder an der Transfervorrichtung selbst angebracht, so dass bereits während des Transfers eines Reagenzbehälters von dem zweiten in den ersten Reagenzbehältervorrat die Art des neu geladenen Reagenzes ermittelt und gespeichert werden kann. Dadurch ist der Steuereinheit die entsprechende Information bereits während des Transfers bekannt und diese braucht nicht erst nach dem Beladen im ersten Reagenzbehältervorrat ermittelt zu werden. Dies bietet insbesondere den Vorteil, dass weder im ersten noch im zweiten Reagenzbehältervorrat die Abstände zwischen den Aufnahmepositionen bzw. von einem Rand des Reagenzbehältervorrats zu einer Aufnahmeposition so groß gewählt werden müssen, dass die Informationen hier noch ausgelesen werden können. Dadurch lassen sich mehr Reagenzbehälter auf einem Reagenzbehältervorrat mit gegebener Fläche unterbringen und das Gerät kann platzsparender ausgelegt werden.

In weiterer vorteilhafter Ausgestaltung weist die Reagenzstation eine Schütteleinrichtung zum Schütteln der Reagenzbehälter auf. Einzelne Reagenzien erfordern nämlich ein Aufschütteln, um Sedimentationen oder Entmischungen zu verhindern.

Bevorzugterweise ist die Schütteleinrichtung entlang des Transferweges zwischen dem zweiten und ersten Reagenzbehältervorrat oder an der Transfervorrichtung selbst angebracht, so dass ein Reagenzbehälter während des Transfers von dem zweiten in den ersten Reagenzbehältervorrat geschüttelt werden kann.

Die Schütteleinrichtung kann in Form einer speziellen Aufnahmeposition für einen Reagenzbehälter ausgestaltet sein, in die ein Reagenzbehälter, nachdem er dem zweiten Reagenzbehältervorrat entnommen wurde und die Identifikationseinrichtung erkannt hat, dass es sich um ein zu schüttelndes Reagenz handelt, transferiert wird. Die spezielle Aufnahmeposition zum Schütteln kann zum Beispiel nach dem Prinzip eines Rütteltischs oder in Form einer über Kopf rotierenden Halterung ausgeformt sein. Alternativ kann die Schütteleinrichtung aus einem rotierenden Exzenter nach dem Prinzip eines Vortexers bestehen, der, wenn ein Reagenzbehälter von der Transfervorrichtung mit dem Exzenter in Kontakt gebracht wird, eine Rotationsbewegung ausführt und den Reagenzbehälter so in mechanische Schwingung versetzt.

In einer anderen Ausführungsform kann die Schütteleinrichtung in die Transfervorrichtung integriert sein. Dazu kann beispielsweise der Arm, an dem die Greifeinrichtung für den Reagenzbehälter angebracht ist, so ausgestaltet und steuerbar sein, dass dieser während des Transfervorgangs Schüttelbewegungen ausführen kann.

Ein weiterer Gegenstand der vorliegenden Erfindung ist ein automatisches Analysegerät, das eine erfindungsgemäße Reagenzstation umfasst.

Ferner betrifft die Erfindung ein Verfahren zum Beladen eines automatischen Analysegerätes mit mindestens einem Reagenzbehälter. Das erfindungsgemäße Verfahren umfasst folgende Verfahrensschritte:
a) Platzieren eines Reagenzbehälters in einer Aufnahmeposition eines zweiten Reagenzbehältervorrats,
b) Drehen des zweiten Reagenzbehältervorrats in eine Position, so dass von einer Transfervorrichtung auf die Aufnahmeposition zugegriffen werden kann,
c) Entnahme des Reagenzbehälters aus der Aufnahmeposition durch die Transfervorrichtung,
d) Transfer des Reagenzbehälters zu einer Aufnahmeposition eines ersten Reagenzbehältervorrats durch die Transfervorrichtung, und
e) Platzieren des Reagenzbehälters in der Aufnahmeposition des ersten Reagenzbehältervorrats durch die Transfervorrichtung.

Bevorzugterweise erfolgt das Platzieren des Reagenzbehälters in einer Aufnahmeposition des zweiten Reagenzbehältervorrats manuell durch einen Benutzer.

In einer anderen bevorzugten Ausführungsform des Verfahrens passiert der Reagenzbehälter während des Transfers zu einer Aufnahmeposition des zweiten Reagenzbehältervorrats eine Identifikationseinrichtung, beispielsweise einen Strichcode-Scanner, eine Digitalkamera oder einen RFID-Leser, die Informationen zur Identität des Reagenzbehälters bzw. des Behälterinhalts erfasst.

In einer wiederum anderen bevorzugten Ausführungsform des Verfahrens wird der Reagenzbehälter vor dem Platzieren des Reagenzbehälters in der Aufnahmeposition des zweiten Reagenzbehältervorrats geschüttelt.

Die mit der Erfindung erzielten Vorteile bestehen insbesondere darin, dass durch die Verwendung von zwei unabhängigen, drehbaren Reagenzbehältervorräten mit kreisförmig angeordneten Aufnahmepositionen, die durch eine lineare Transfervorrichtung gekoppelt sein können, die betriebliche Sicherheit und der Analysedurchsatz eines Analysegeräts erheblich verbessert werden. Ebenso wird die Benutzerfreundlichkeit erhöht, da der Benutzer das notwendige Be- und Entladen von Reagenzbehältern zu jeder ihm genehmen Zeit durchführen kann. Die integrierten Schüttel- und Identifizierungsfunktionen erniedrigen nicht den Durchsatz des Systems.

Die beschriebene Anordnung bietet weiterhin den Vorteil, dass mehrere Reagenzbehälter von einem Benutzer geladen werden können oder eine gleichzeitige Be- und Entladung vorgenommen werden kann. Wenn der zweite Reagenzbehältervorrat nur eine Aufnahmeposition aufweisen würde, könnte zwar gefahrlos ein Reagenzbehälter eingesetzt werden. Der Benutzer müsste dann jedoch warten, bis die Transfervorrichtung je nach Ablaufplanung der Steuereinheit den Reagenzbehälter wieder entnommen hat. Dies wird durch eine Mehrzahl von Aufnahmepositionen vermieden. Es können auch mehrere Aufnahmepositionen des zweiten Reagenzbehältervorrats gleichzeitig über ein Benutzerzugriffselement für den Benutzer erreichbar sein. Weiterhin kann es vorgesehen sein, dass zu einem gegebenen Zeitpunkt jeweils nur auf eine Aufnahmeposition manuell zugegriffen werden kann.

Die Erfindung wird anhand einer Zeichnung näher erläutert.

### FIGURENBESCHREIBUNG

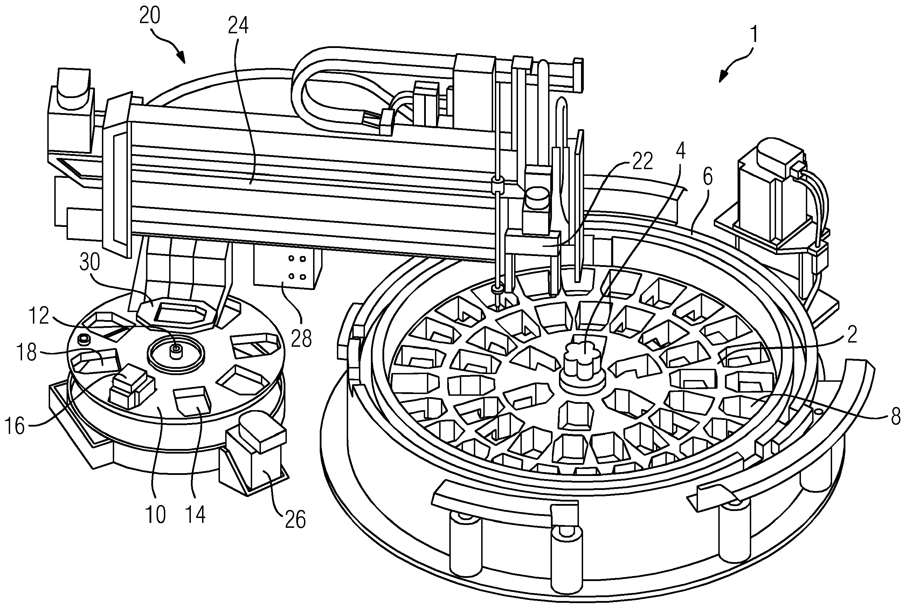

Figur 1 zeigt schematisch den Aufbau einer Reagenzstation 1 eines nicht näher dargestellten Analysegeräts. Die Reagenzstation 1 weist einen ersten Reagenzbehältervorrat 2 auf, auf den das Analysegerät 1 mit einer nicht näher dargestellten Pipettiereinrichtung während der automatisiert ablaufenden Analyse einer Vielzahl von Proben von Körperflüssigkeiten zugreift. Für die Planung der Arbeitsschritte und die Eingabe der vom Benutzer gewünschten Analysen weist das Analysegerät 1 eine nicht näher dargestellte Steuereinheit auf, die als Personal Computer ausgelegt ist.

Der Reagenzbehältervorrat 2 ist kreisrund ausgestaltet und um eine Achse 4 drehbar gelagert. Die Drehung wird durch die Steuereinheit gesteuert. Der Reagenzbehältervorrat 2 ist von einer Kühleinheit 6 umgeben, die die Haltbarkeit der Reagenzien im Reagenzbehältervorrat 2 gewährleistet. Die Reagenzbehälter selbst sind nicht dargestellt, lediglich die Aufnahmepositionen 8 für die Reagenzgefäße, die in konzentrischen Kreisen mit drei unterschiedlichen Radien um die Achse 4 angeordnet sind. Die jeweiligen Kreise umfassen dabei von innen nach außen sechs, achtzehn bzw. vierundzwanzig Aufnahmepositionen 8, so dass insgesamt achtundvierzig Aufnahmepositionen 8 vorhanden sind.

Der Reagenzbehältervorrat 2 ist für den Benutzer im Regelbetrieb unzugänglich. Zur Be- und Entladung der Reagenzbehälter weist die Reagenzstation 1 einen zweiten Reagenzbehältervorrat 10 auf, der um eine Achse 12 drehbar gelagert ist. Der Reagenzbehältervorrat 10 umfasst acht Aufnahmepositionen 14 für Reagenzgefäße, die kreisförmig um die Achse 12 angeordnet sind. Ein Reagenzgefäß 16 ist in einer Aufnahmeposition 14 dargestellt. Der Benutzer kann durch ein nicht näher dargestelltes, stationäres, d.h. nicht mitdrehendes Zugriffsfenster auf eine der Aufnahmepositionen 14 zugreifen. Das Zugriffsfenster ist an der Position 18 angeordnet und weist eine verschließbare Tür auf.

Weiterhin weist die Reagenzstation 1 eine Transfervorrichtung 20 auf, umfassend eine Greifeinrichtung 22, die dazu ausgebildet ist, die Reagenzgefäße 16 aus den Aufnahmepositionen 8, 14 zu heben oder sie darin abzusetzen. Die Greifeinrichtung ist an einer Schiene 24 beweglich angeordnet, die sich im Wesentlichen linear zwischen den Achsen 4, 12 erstreckt. Die Reagenzstation 1 umfasst weiterhin eine Dreheinrichtung 26 zum automatisierten Drehen des zweiten Reagenzbehältervorrats 10. Die Greifeinrichtung 22 ist mit einem Sensor ausgestattet, der es der Steuereinheit erlaubt zu ermitteln, ob die jeweilige Aufnahmeposition 8, 14 belegt oder frei ist.

Zum Entladen eines oder mehrerer Reagenzbehälter 16 aus dem Reagenzbehältervorrat 2, beispielsweise aufgrund abgelaufener Haltbarkeitsdaten oder wegen Verbrauch, wird der entsprechende Reagenzbehälter 16 mittels der Transfervorrichtung 20 aus dem Reagenzbehältervorrat 2 in den Reagenzbehältervorrat 10 transferiert. Dieser Prozess wird automatisch von der Steuereinheit durchgeführt, so dass die dafür benötigten Arbeitsschritte in den Analyseablauf integriert werden können und nicht zu Unterbrechungen führen.

Dazu wird der Reagenzbehältervorrat 2 zunächst derart um die Achse 4 gedreht, dass die entsprechende Aufnahmeposition 8 mit dem auszutauschenden Reagenzbehälter 16 unter der Schiene 24 angeordnet ist. Die Greifeinrichtung 22 entnimmt den Reagenzbehälter 16 und transportiert ihn entlang der Schiene 24 zum Reagenzbehältervorrat 10. Der Reagenzbehältervorrat 10 wird derart gedreht, dass eine freie Aufnahmeposition 14 unter der Schiene 24 liegt, und die Greifeinrichtung 22 setzt den Reagenzbehälter 16 in die freie Aufnahmeposition 14. Anschließend wird mittels der Dreheinrichtung 26 der Reagenzbehälter 16 in die Position 18 transportiert, so dass er durch das Zugriffsfenster vom Benutzer entfernt werden kann. Die Dreheinrichtung 26 ist dabei so ausgelegt, dass sie inaktiv ist, sobald die Tür des Zugriffsfensters geöffnet ist.

Der Benutzer kann nun einen neuen Reagenzbehälter 16 in eine Aufnahmeposition 14 einsetzen. Sollen weitere Reagenzbehälter 16 eingesetzt werden, kann der Benutzer die Tür des Zugriffsfensters verschließen und die Dreheinrichtung 26 manuell betätigen, so dass eine weitere freie Aufnahmeposition 14 in die Position 18 gebracht wird. Während dieser Zeit kann das Analysesystem ungestört auf den ersten Reagenzbehältervorrat 2 zugreifen. Sind alle gewünschten Reagenzbehälter 16 eingesetzt, startet der Benutzer den Transfer. Nunmehr werden von der Steuereinheit automatisiert und in die Abläufe der Analyse optimal integriert mittels der Transfervorrichtung 20 die Reagenzbehälter in freie Aufnahmepositionen 8 des ersten Reagenzbehältervorrats 2 überführt.

Dazu wird der Reagenzbehältervorrat 10 zunächst derart um die Achse 4 gedreht, dass eine entsprechende Aufnahmeposition 14 mit einem neu eingesetzten Reagenzbehälter 16 unter der Schiene 24 angeordnet ist. Die Greifeinrichtung 22 entnimmt den Reagenzbehälter 16 und transportiert ihn entlang der Schiene 24 zum ersten Reagenzbehältervorrat 2. Der Reagenzbehältervorrat 2 wird derart gedreht, dass eine freie Aufnahmeposition 14 unter der Schiene 24 liegt, und die Greifeinrichtung 22 setzt das Reagenzgefäß 16 in die freie Aufnahmeposition 14. Dieser Vorgang wird für alle neu besetzten Aufnahmepositionen 14 im zweiten Reagenzbehältervorrat 10 wiederholt, jeweils automatisiert gesteuert von der Steuereinrichtung, die den Transfer so optimiert, dass er die Analyse nicht beeinträchtigt.

Während des Transfers wird mittels einer Identifikationseinrichtung 28, die stationär und für die Transfervorrichtung 20 erreichbar angeordnet ist und einen Barcodeleser umfasst, ein Barcode auf dem jeweiligen Reagenzbehälter 16 ausgelesen, der insbesondere Informationen über Inhalt und Haltbarkeitsdatum enthält. Diese Information wird in der Steuereinheit gespeichert, so dass die Steuereinheit stets Informationen über die in jeder Aufnahmeposition 8 des ersten Reagenzbehältervorrats 2 eingesetzten Reagenzbehälter hat.

Weiterhin umfasst die Transfervorrichtung 20 eine Schütteleinrichtung 30, die durch die Greifeinrichtung 22 erreichbar wird. Ein neu eingesetztes Reagenzgefäß kann hier vor dem Absetzen im ersten Reagenzbehältervorrat 2 eingesetzt und aufgeschüttelt werden. Weiterhin kann die Steuereinheit auch in regelmäßigen Abständen veranlassen, dass Reagenzbehälter mit Reagenzien, die dies erfordern, aus dem Reagenzbehältervorrat 2 mittels der Transfervorrichtung 20 entnommen werden und in der Schütteleinrichtung 30 aufgeschüttelt werden. Diese Schritte können ebenfalls optimiert in den Arbeitsablauf der Analyse integriert werden.

### BEZUGSZEICHENLISTE

- 1: Reagenzstation
- 2: erster Reagenzbehältervorrat
- 4: Achse
- 6: Kühleinheit
- 8: Aufnahmeposition
- 10: zweiter Reagenzbehältervorrat
- 12: Achse
- 14: Aufnahmeposition
- 16: Reagenzbehälter
- 18: Position
- 20: Transfervorrichtung
- 22: Greifeinrichtung
- 24: Schiene
- 26: Dreheinrichtung
- 28: Identifikationseinrichtung
- 30: Schütteleinrichtung

## Patentansprüche

1. Automatisches Analysegerät mit einer Reagenzstation (1), die Reagenzstation (1) umfassend
- einen ersten Reagenzbehältervorrat (2) mit einer Mehrzahl von Aufnahmepositionen (8) für Reagenzbehälter,
- einen zweiten Reagenzbehältervorrat (10) mit einer Mehrzahl von Aufnahmepositionen (14) für Reagenzbehälter und wobei der zweite Reagenzbehältervorrat (10) drehbar gelagert ist,
- eine Transfervorrichtung (20) zum Transferieren von Reagenzbehältern zwischen dem ersten und dem zweiten Reagenzbehältervorrat (2, 10),
- eine Steuereinheit, und
- eine Pipettiervorrichtung,
wobei die Pipettiervorrichtung auf den ersten Reagenzbehältervorrat (2), aber nicht auf den zweiten Reagenzbehältervorrat (10) zugreifen kann, und
wobei die Aufnahmepositionen (14) des zweiten Reagenzbehältervorrats (10) kreisförmig angeordnet sind, **dadurch gekennzeichnet, dass** zumindest eine Aufnahmeposition (14) des zweiten Reagenzbehältervorrats (10) über ein Benutzerzugriffselement für einen Benutzer erreichbar ist und wobei das automatische Analysegerät ein Gehäuse umfasst und wobei die Reagenzstation durch das Gehäuse umgeben ist und wobei das Benutzerzugriffselement eine Verbindung zwischen dem Geräteinnenraum, in dem die Reagenzstation angeordnet ist, und der Geräteumgebung schafft und wobei die Steuereinheit so konfiguriert ist, dass bei einem Zugriff durch einen Benutzer auf eine Aufnahmeposition (14) des zweiten Reagenzbehältervorrats (10) kein Zugriff durch die Transfervorrichtung (20) auf den zweiten Reagenzbehältervorrat (10) erfolgt, während auf den ersten Reagenzbehältervorrat (2) weiterhin durch die Pipettiervorrichtung zugegriffen werden kann.

2. Automatisches Analysegerät nach Anspruch 1, wobei die Steuereinheit mit einer Sicherungseinrichtung, beispielsweise mit einer Lichtschranke oder einer verriegelbaren Schiebetür oder Klappe im Bereich des Benutzerzugriffselements, verbunden ist.

3. Automatisches Analysegerät nach einem der vorhergehenden Ansprüche, wobei die Reagenzstation (1) ferner eine Identifikationseinrichtung (28) für Reagenzbehälter aufweist.

4. Automatisches Analysegerätnach einem der vorhergehenden Ansprüche, wobei die Reagenzstation (1) ferner eine Schütteleinrichtung (30) für Reagenzbehälter aufweist.

5. Automatisches Analysegerätnach Anspruch 1, wobei die Aufnahmepositionen (8) des ersten Reagenzbehältervorrats (2) kreisförmig angeordnet sind.

6. Automatisches Analysegerätnach Anspruch 5, wobei die Aufnahmepositionen (8) des ersten Reagenzbehältervorrats (2) in mehreren konzentrischen Kreisen kreisförmig angeordnet sind.

7. Automatisches Analysegerätnach Anspruch 6, wobei die Aufnahmepositionen (8) des ersten Reagenzbehältervorrats (2) radiärsymmetrisch angeordnet sind.

8. Automatisches Analysegerätnach einem der vorherigen Ansprüche, wobei der erste Reagenzbehältervorrat (2) drehbar gelagert ist.

9. Automatisches Analysegerätnach einem der Ansprüche 6-8, bei der sich die Transfervorrichtung (20) auf einer Linie bewegt, die die Mittelpunkte (4, 12) der kreisförmig angeordneten Aufnahmepositionen (8, 14) verbindet.

10. Verfahren zum Beladen eines automatischen Analysegerätes nach einem der Ansprüche 1 bis 9 mit mindestens einem Reagenzbehälter mit folgenden aufeinander folgenden Verfahrensschritten:
a) Platzieren eines Reagenzbehälters (16) in einer Aufnahmeposition (14) eines zweiten Reagenzbehältervorrats (10),
b) Drehen des zweiten Reagenzbehältervorrats (10) in eine Position, so dass von einer Transfervorrichtung (20) auf die Aufnahmeposition (14) zugegriffen werden kann,
c) Entnahme des Reagenzbehälters (16) aus der Aufnahmeposition (14) durch die Transfervorrichtung (20),
d) Transfer des Reagenzbehälters (16) zu einer Aufnahmeposition (8) eines ersten Reagenzbehältervorrats (2) durch die Transfervorrichtung (20), und
e) Platzieren des Reagenzbehälters (16) in der Aufnahmeposition (8) des ersten Reagenzbehältervorrats (2) durch die Transfervorrichtung (20).

11. Verfahren nach Anspruch 10, wobei das Platzieren des Reagenzbehälters (16) in Schritt a) manuell durch einen Benutzer erfolgt.

12. Verfahren nach einem der Ansprüche 10 und 11, wobei der Reagenzbehälter (16) während des Transfers zu einer Aufnahmeposition (8) des zweiten Reagenzbehältervorrats (2) eine Identifikationseinrichtung (28) passiert, die Informationen zur Identität des Reagenzbehälters (16) erfasst.

13. Verfahren nach einem der Ansprüche 10 bis 12, wobei der Reagenzbehälter (16) vor dem Platzieren des Reagenzbehälters (16) in der Aufnahmeposition (8) des zweiten Reagenzbehältervorrats (2) geschüttelt wird.

## Claims

1. Automated analysis device with a reagent station (1), the reagent station (1) comprising:
- a first reagent container storage (2) with a plurality of receptacle positions (8) for reagent containers,
- a second reagent container storage (10) with a plurality of receptacle positions (14) for reagent containers and wherein the second reagent container storage (10) is rotatably mounted,
- a transfer apparatus (20) for transferring reagent containers between the first and the second reagent container storage (2, 10),
- a control unit, and
- a pipetting apparatus,
wherein the pipetting apparatus can access the first reagent container storage (2) but not the second reagent container storage (10), and
wherein the receptacle positions (14) of the second reagent container storage (10) are arranged circularly,
**characterized in that** at least one receptacle position (14) of the second reagent container storage (10) can be reached by a user by means of a user access element, and
wherein the automated analysis device comprises a housing and wherein the reagent station is surrounded by the housing and wherein the user access element creates a connection between the device interior, in which the reagent station is arranged, and the device surroundings and wherein the control unit is configured such that when a user accesses a receptacle position (14) of the second reagent container storage (10) the transfer apparatus (20) has no access to the second reagent container storage (10), while the first reagent container storage (2) can continue to be accessed by the pipetting apparatus.

2. Automated analysis device according to Claim 1, wherein the control unit is connected to a securing mechanism, for example to a photoelectric barrier or a lockable sliding door or flap in the region of the user access element.

3. Automated analysis device according to one of the preceding claims, wherein the reagent station (1) furthermore comprises an identification mechanism (28) for reagent containers.

4. Automated analysis device according to one of the preceding claims, wherein the reagent station (1) furthermore comprises a shaker mechanism (30) for reagent containers.

5. Automated analysis device according to Claim 1, wherein the receptacle positions (8) of the first reagent container storage (2) are arranged circularly.

6. Automated analysis device according to Claim 5, wherein the receptacle positions (8) of the first reagent container storage (2) are arranged circularly in a plurality of concentric circles.

7. Automated analysis device according to Claim 6, wherein the receptacle positions (8) of the first reagent container storage (2) are arranged with radial symmetry.

8. Automated analysis device according to one of the preceding claims, wherein the first reagent container storage (2) is rotatably mounted.

9. Automated analysis device according to one of Claims 6-8, in which the transfer apparatus (20) moves along a line which connects the center points (4, 12) of the circularly arranged receptacle positions (8, 14).

10. Method for loading an automated analysis device according to one of Claims 1 to 9 with at least one reagent container, comprising the following successive method steps:
a) placing a reagent container (16) into a receptacle position (14) of a second reagent container storage (10),
b) rotating the second reagent container storage (10) into a position such that a transfer apparatus (20) can access the receptacle position (14),
c) removing the reagent container (16) from the receptacle position (14) by means of the transfer apparatus (20),
d) transferring the reagent container (16) to a receptacle position (8) of a first reagent container storage (2) by means of the transfer apparatus (20) and
e) placing the reagent container (16) into the receptacle position (8) of the first reagent container storage (2) by means of the transfer apparatus (20).

11. Method according to Claim 10, wherein placing the reagent container (16) in step a) takes place manually by a user.

12. Method according to either of Claims 10 and 11, wherein the reagent container (16) passes an identification mechanism (28) which captures information in respect of the identity of the reagent container (16) during the transfer to a receptacle position (8) of the second reagent container storage (2).

13. Method according to one of Claims 10 to 12, wherein the reagent container (16) is shaken before said reagent container (16) is placed into the receptacle position (8) of the second reagent container storage (2).

## Revendications

1. Appareil d'analyse automatique, comprenant un poste (1) à réactif, le poste (1) à réactif comprenant
- une première réserve (2) de récipients à réactif, ayant une pluralité de positions (8) de réception de récipient à réactif,
- un deuxième réserve (10) de récipients à réactif, ayant une pluralité de positions (14) de réception de récipient à réactif et dans lequel le deuxième réservoir (10) à réactif est montée tournante,
- un système (20) de transfert pour transférer des récipients à réactif entre la première et la deuxième réserve (2, 10) de récipients à réactif,
- une unité de commande et
- un système de pipetage,
dans lequel le système de pipetage peut accéder à la première réserve (2) de récipients à réactif, mais non à la deuxième réserve (10) de récipients à réactif et
dans lequel les positions (14) de réception de la deuxième réserve (10) de récipients à réactif sont disposées sous la forme d'un cercle,
**caractérisé en ce qu'**au moins une position (14) de réception de la deuxième réserve (10) de récipients à réactif peut être atteinte par un utilisateur, par un élément de récipients d'accès par un utilisateur, et dans lequel l'appareil d'analyse automatique comprend un boîtier, et dans lequel le poste à réactif est entouré du boîtier, et dans lequel l'élément d'accès par un utilisateur ménage une liaison entre l'intérieur de l'appareil, dans lequel est disposé le poste à réactif, et les alentours de l'appareil, et dans lequel l'unité de commande est configurée de manière à ce que, si un utilisateur accède à une position (14) de réception de la deuxième réserve (10) de récipients à réactif, un accès par le système (20) de transfert à la deuxième réserve (10) de récipients à réactif ne peut pas avoir lieu, tandis que le système de pipetage peut continuer à avoir accès à la première réserve (2) de récipients à réactif.

2. Appareil d'analyse automatique suivant la revendication 1, dans lequel l'unité de commande est reliée à un dispositif de sécurité, par exemple à une cellule photoélectrique, ou à une porte coulissante verrouillable, ou à un volet, dans la partie de l'élément d'accès par un utilisateur.

3. Appareil d'analyse automatique suivant l'une des revendications précédentes, dans lequel le poste (1) à réactif a, en outre, un dispositif (28) d'identification de récipient à réactif.

4. Appareil d'analyse automatique suivant l'une des revendications précédentes, dans lequel le poste (1) à réactif a, en outre, un dispositif (30) de secouage de récipient à réactif.

5. Appareil d'analyse automatique suivant la revendication 1, dans lequel les positions (8) de réception de la première réserve (2) de récipients à réactif sont disposés en forme de cercle.

6. Appareil d'analyse automatique suivant la revendication 5, dans lequel les positions (8) de réception de la première réserve (2) de récipients à réactif sont disposées en forme de cercle suivant plusieurs cercles concentriques.

7. Appareil d'analyse automatique suivant la revendication 6, dans lequel les positions (8) de réception de la première réserve (2) de récipients à réactif sont disposées à symétrie radiale.

8. Appareil d'analyse automatique suivant l'une des revendications précédentes, dans lequel la première réserve (2) de récipients à réactif est montée tournante.

9. Appareil d'analyse automatique suivant l'une des revendications 6 à 8, dans lequel le système (20) de transfert se déplace sur une ligne, qui passe par les milieux (4, 12) des positions (8, 14) de réception disposées en forme de cercle.

10. Procédé de chargement d'un appareil d'analyse automatique suivant l'une des revendications 1 à 9, comprenant au moins un récipient à réactif ayant les stades de procédé successifs suivants :
a) on place un récipient (16) à réactif dans une position (14) de réception de la deuxième réserve (10) de récipients à réactif,
b) on fait tourner la réserve (10) de récipients à réactif pour l'amener dans une position, de manière à ce qu'un système (20) de transfert puisse accéder à la position (14) de réception,
c) on prélève le récipient (16) à réactif de la position (14) de réception par le système (20) de transfert,
d) on transfère le récipient (16) à réactif à une position (8) de réception de la première réserve (2) de récipients à réactif, par le système (20) de transfert et
e) on place le récipient (16) à réactif dans la position (8) de réception de la première réserve (2) de récipients à réactif, par le système (20) de transfert.

11. Procédé suivant la revendication 10, dans lequel placer le récipient (16) à réactif au stade a) s'effectue manuellement par un utilisateur.

12. Procédé suivant l'une des revendications 10 et 11, dans lequel le récipient (16) à réactif passe, pendant le transfert à une position (8) de réception de la deuxième réserve (2) de récipients à réactif, dans un dispositif (28) d'identification, qui détecte les informations sur l'identité du récipient (16) à réactif.

13. Procédé suivant l'une des revendications 10 à 12, dans lequel on secoue le récipient (16) à réactif avant de placer le récipient (16) à réactif dans la position (8) de réception de la deuxième réserve (2) de récipients à réactif.
